# FASCICULE DE BREVET EUROPEEN

(11) **EP 2 750 115 B1**
(45) Date de publication et mention de la délivrance du brevet: **16.11.2016**
(21) Numéro de dépôt: 13199617.5
(22) Date de dépôt: 26.12.2013
(51) Int. Cl.: G08B 13/14, G08B 21/02

(54) **Dispositif de détection du vol d'un objet**
Vorrichtung zur Erfassung des Flugs eines Objekts
Device for detecting the theft of an object

(30) Priorité: 27.12.2012 FR 1262836
(43) Date de publication de la demande: 02.07.2014
(73) Titulaire: COMMISSARIAT A L'ENERGIE ATOMIQUE ET AUX ENERGIES ALTERNATIVES, 75015 Paris (FR); Evolution Consulting, 74910 Seyssel (FR)
(72) Inventeur: Boudet, Thierry, 38130 ECHIROLLES (FR); Foschia, François, 74910 SEYSSEL (FR)
(74) Mandataire: Thibon, Laurent

(56) Documents cités:
- WO-A2-2006/057804
- BE-A6- 1 006 701
- US-A1- 2007 222 587

## Description

### Domaine

La présente invention concerne un dispositif de détection du vol d'un objet, notamment un article d'horlogerie ou de joaillerie, par exemple une montre exposée dans une vitrine.

### Exposé de l'art antérieur

Les magasins qui exposent des objets de valeur doivent s'équiper de dispositifs de surveillance et/ou d'alarme pour empêcher le vol de ces objets. Un exemple de dispositif de surveillance comprend des caméras de surveillance disposées sur les lieux d'exposition des articles de valeur. Selon un exemple, le dispositif d'alarme comprend un capteur de détection du retrait d'un objet de son présentoir et un émetteur d'une alarme sonore lorsque l'objet est retiré du présentoir. Selon un autre exemple, le dispositif d'alarme transmet un signal d'alerte lorsqu'un objet est retiré de son présentoir, par exemple à la police ou à un service de sécurité.

Toutefois, ces dispositifs ne sont pas efficaces en cas de vols à main armée. En effet, dans ce type de vol, les voleurs ne cherchent pas à agir de façon discrète. Les voleurs peuvent, en outre, être masqués pour ne pas être reconnus sur des images vidéo. En outre, la durée brève du vol fait que les voleurs peuvent avoir déjà quitté les lieux avant une intervention de la police ou d'un service de sécurité.

Le document BE 1 006 701 décrit un système d'alarme et un procédé de protection contre le vol des objets exposés au public.

### Résumé

Ainsi, on prévoit ici un dispositif de détection du vol d'un objet, destiné à être intégré audit objet, le dispositif comprenant:
une antenne de réception d'un signal de télé-alimentation;
un moyen de détection d'une interruption du signal de téléalimentation ; et
un moyen de fourniture d'un signal d'alarme lorsque l'interruption du signal de téléalimentation est détectée.

Selon un mode de réalisation, le dispositif comporte, en outre, un capteur de déplacement dudit objet.

Selon un mode de réalisation, le moyen de fourniture du signal d'alarme est adapté à fournir ladite alarme lorsqu'un déplacement de l'objet est détecté.

Selon un mode de réalisation, le dispositif comprend, en outre, un moyen de détermination de la position de l'objet.

Il est également prévu un objet comportant un boîtier contenant au moins en partie le dispositif tel que défini précédemment.

Selon un mode de réalisation, le boîtier a une apparence extérieure imitant l'apparence d'un article d'horlogerie et/ou de bijouterie.

Selon un mode de réalisation, le boîtier a l'apparence d'un boîtier de montre.

Selon un mode de réalisation, l'objet comprend, en outre, un bracelet contenant l'antenne de réception du signal de téléalimentation.

Il est également prévu un système comprenant l'objet tel que défini précédemment, et un support dudit objet, le support comportant une antenne d'émission du signal de téléalimentation.

Il est également prévu un procédé de détection du vol d'un objet comprenant:
la réception d'un signal de téléalimentation par une antenne de réception contenue dans l'objet ;
la détection d'une interruption du signal de téléalimentation ; et
la fourniture d'un signal d'alarme lorsque l'interruption du signal de téléalimentation est détectée.

Selon un mode de réalisation, le signal d'alarme est fourni, lorsque l'interruption du signal de téléalimentation est détectée, seulement si un déplacement de l'objet est détecté.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles:
la figure 1 est une vue en perspective d'un mode de réalisation d'un dispositif de détection de vol ;
la figure 2 représente, de façon schématique, les éléments du dispositif de la figure 1 ;
la figure 3 illustre, sous la forme d'un schéma-bloc, un mode de réalisation d'un procédé de détection de vol ;
la figure 4 est une vue en perspective d'une partie du boîtier du dispositif de la figure 1 ;
la figure 5 est une vue schématique en perspective, avec coupe, du dispositif de la figure 1 ;
la figure 6 est une vue en perspective d'éléments contenus dans le boîtier du dispositif de la figure 1 ;
la figure 7 est une vue schématique d'une antenne de charge par induction du dispositif de la figure 1 ;
la figure 8 est une vue éclatée et schématique d'un autre mode de réalisation du dispositif de détection de vol ;
la figure 9 est une vue schématique d'antenne du dispositif de la figure 8 ; et
la figure 10 représente, de façon schématique, les éléments d'un autre mode de réalisation du dispositif de détection de vol.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de la présente description ont été représentés et sont décrits. Dans la suite de la description, sauf indication contraire, les termes "sensiblement", "environ" et "de l'ordre de" signifient "à 10 % près".

Il existe des dispositifs de détection de vol qui comprennent un dispositif de localisation, par exemple un dispositif de localisation géographique, ou géolocalisation, par satellites ou GPS (sigle anglais pour Global Positioning System) qui peuvent être intégrés à un objet susceptible d'être volé. Les coordonnées géographiques d'un objet muni d'un dispositif de localisation géographique peuvent être transmises par une liaison sans fil, par exemple en utilisant un service de messages courts, également appelés minimessages ou SMS (sigle anglais pour Short Message Service). Ainsi, en cas de vol, la position de l'objet peut être suivie.

Toutefois, des tels dispositifs de surveillance présentent plusieurs inconvénients.

En effet, un message d'alarme est généralement émis lorsqu'un déplacement de l'objet muni du dispositif de surveillance est détecté. Toutefois, un tel procédé de détection de vol peut conduire à l'émission d'un message d'alarme alors qu'il n'y a pas de vol, par exemple dans le cas d'un déplacement du présentoir sur lequel repose l'objet pour des opérations de maintenance.

Ces dispositifs de surveillance peuvent être trop volumineux pour être dissimulés dans des objets susceptibles d'être volés. C'est le cas notamment d'articles de valeur, notamment d'articles d'horlogerie ou de joaillerie qui peuvent être de petites dimensions.

L'objet doit comprendre une pile ou une batterie pour alimenter le dispositif de localisation et le dispositif de transmission des messages d'alarme lorsque l'objet est retiré du présentoir. Il est souhaitable que le dispositif de localisation reste alimenté le plus longtemps possible en cas de vol pour que le suivi de la position de l'objet volé soit réalisé le plus longtemps possible. Ceci impose que l'état de charge de la batterie soit maintenu sensiblement à un niveau maximal tant que l'objet n'est pas volé. Ceci peut nécessiter une opération de recharge périodique de la pile, ce qui n'est pas souhaitable. Toutefois, la charge de la batterie ne peut pas être réalisée par un système d'alimentation continu qui soit visible. En effet, un voleur ne doit pas se douter que l'objet volé est muni d'un dispositif de localisation.

Ainsi, un objet d'un mode de réalisation est de pallier tout ou partie des inconvénients des dispositifs de détection de vol décrits précédemment.

Un autre objet d'un mode de réalisation est que l'alimentation de la batterie du dispositif de détection de vol n'est pas visible depuis l'extérieur de l'objet muni du dispositif de détection de vol.

Un autre objet d'un mode de réalisation est que les risques d'erreurs de détection de vol sont réduits.

Un autre objet d'un mode de réalisation est que l'objet muni du dispositif de détection de vol a une taille réduite.

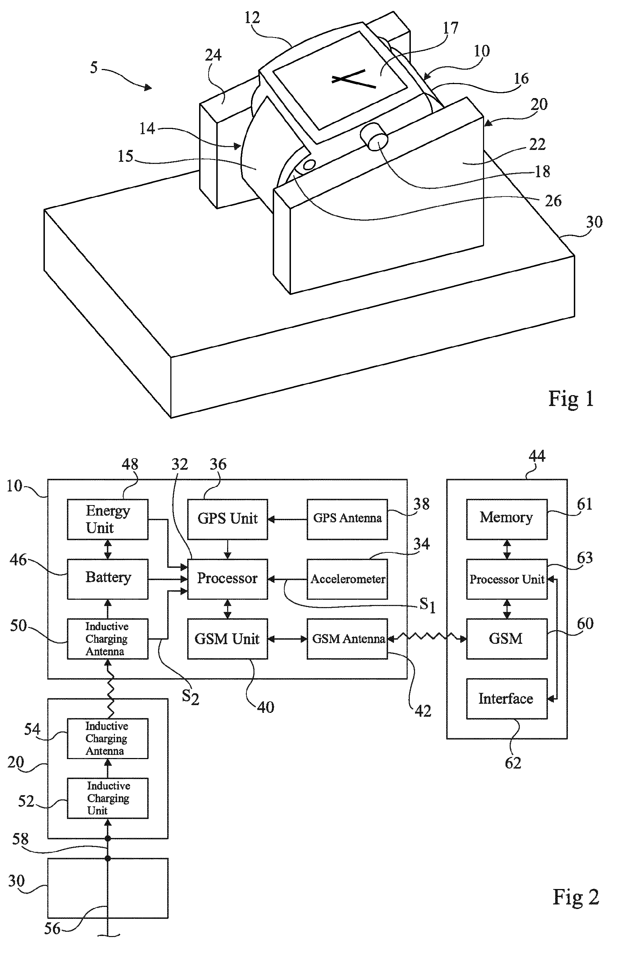

La figure 1 représente un mode de réalisation d'un dispositif 5 de détection de vol selon l'invention. Le dispositif 5 comprend un objet, constituant un leurre, ayant l'apparence d'un objet susceptible d'être volé. Dans le présent mode de réalisation, le dispositif 5 comprend une montre factice 10 ayant un boîtier 12 et un bracelet 14. Les dimensions de la montre 10 correspondent à celles d'une montre classique. Le bracelet 14 comprend deux parties de bracelet 15, 16, chaque partie 15, 16 étant attachée au boîtier 12 à une extrémité. Le boîtier 12 a la forme extérieure d'un boîtier de montre et comprend, par exemple un cadran 17 avec des aiguilles et un bouton de réglage 18. Toutefois, il s'agit de préférence d'éléments factices qui ne sont pas fonctionnels.

La montre factice 10 est disposée sur un socle 20. Le socle 20 a l'apparence des socles de montre utilisés de façon générale en horlogerie. Le socle 20 comprend, par exemple, deux flasques latéraux 22, 24, de part et d'autre de la montre 10 et une portion cylindrique 26 reliant les deux flasques 22, 24. Le bracelet 14 de la montre 10 peut être disposé autour de la portion cylindrique 26.

Le socle 20 est posé sur un présentoir 30. De vraies montres sont également disposées sur le présentoir 30 autour de la montre factice 10. Ainsi, en cas de vol, la probabilité que la montre factice 10 soit volée avec les montres voisines est élevée. En cas de vol, seule la montre 10 peut être volée ou l'ensemble constitué de la montre 10 et du socle 20 peut être volé.

La figure 2 représente, de façon schématique, des éléments contenus dans la montre factice 10 et le socle 20 selon un mode de réalisation.

La montre 10 comprend:
un module de traitement 32 (Processor), par exemple un microcontrôleur ;
un accéléromètre 34 (Accelerometer) relié au module de traitement 32 et adapté à fournir au module de traitement 32 un signal représentatif de l'accélération de la montre 10 ;
un module 36 de géolocalisation par satellites, par exemple un module de localisation GPS, relié au module de traitement 32 et à une antenne 38 (GPS Antenna), le module 36 étant adapté à fournir au module de traitement 32 un signal représentatif des coordonnées géographiques de la montre 10 ;
un module de télécommunication 40 (GSM Unit), relié au module de traitement 32 et à une antenne 42 (GSM Antenna), adapté à échanger des données avec un serveur 44 par l'intermédiaire d'un réseau de télécommunications de téléphonie mobile, par exemple un module GSM (sigle anglais pour Global System for Mobile communications) ou un module UMTS (sigle anglais pour Universal Mobile Télécommunications System) ;
un système de stockage d'énergie 46 (Battery) adapté à alimenter l'ensemble des composants de la montre 10, par exemple une batterie au lithium à haute densité d'énergie et forte puissance munie, par exemple, d'électrodes au silicium, notamment un accumulateur décrit dans la publication intitulée "Structural Changes in Silicon Anodes during Lithium Insertion/Extraction" aux noms de M.N. Obrovac et L. Christensen (Electrochemical and Solid-State Letters, 7 (5) A93-A96 (2004)) ;
un module de commande de la batterie 48 (Energy Unit), relié au module de traitement 32 et à la batterie 46, adapté à piloter le module de traitement 32 en fonction de l'état de charge de la batterie 46 ; et
une antenne de réception 50, reliée à la batterie 46, aux modules 32 et 48, et adaptée à recevoir un signal de téléalimentation pour la charge de la batterie 46 par couplage inductif.

Dans le présent mode de réalisation, le socle 20 comprend un générateur 52 (Inductive Charging Unit) relié à une antenne 54 d'émission radiofréquence. Lorsque la montre 10 est agencée sur le socle 20, l'antenne de réception 50 est disposée sensiblement en vis-à-vis de l'antenne d'émission 54 de sorte qu'un transfert d'énergie par couplage inductif peut être obtenu entre l'antenne d'émission 54 et l'antenne de réception 50. A titre d'exemple, le générateur 52 est alimenté par une tension, par exemple une tension continue d'environ 12 V, et fournit à l'antenne d'émission 54 une tension oscillant à plusieurs mégahertz, par exemple à environ 113,5 MHz.

Le présentoir 30 comprend un câble électrique 56 relié à une source d'énergie extérieure, non représentée, par exemple le réseau électrique ou une source de tension continue.

Le socle 20 est relié au présentoir 30 par un connecteur 58 électrique qui fournit une liaison électrique entre le câble 56 et le transformateur 52. Le générateur 52 est adapté à commander l'antenne 54 pour la fourniture d'énergie. De préférence, le connecteur 58 est un connecteur électrique à contacts pressés, par exemple du type utilisé pour relier un téléphone sans fil à sa base d'alimentation. A titre de variante, le socle et le présentoir peuvent être reliés par un couplage inductif, de sorte qu'un transfert d'énergie ait lieu du présentoir vers le socle.

Le serveur 44 comprend:
un module de télécommunication 60 (GSM), adapté à échanger des données avec le module 40 ;
un système 61 (Memory) de stockage de données, comprenant par exemple une mémoire volatile ;
une interface 62 (Interface) permettant l'échange de données entre le serveur 44 et d'autres systèmes et permettant, par exemple, de relier le serveur 44 au réseau Internet ; et
un système de traitement de données 63 (Processor Unit) relié au module de télécommunications 60, au système 61 de stockage de données et à l'interface 62.

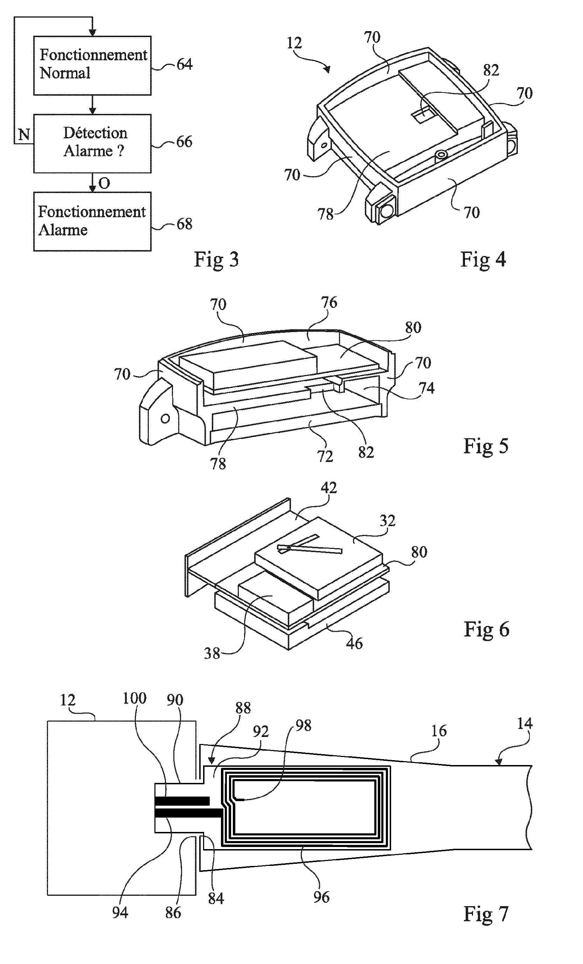

La figure 3 illustre un mode de réalisation d'un procédé de détection de vol.

L'étape 64 correspond à un fonctionnement de la montre factice 10 en l'absence de vol. La montre 10 est alors disposée sur le socle 20, lui-même étant posé sur le présentoir 30 comme cela est représenté en figure 1. Le socle 20 est alors connecté électriquement au présentoir 30 par le connecteur 58. La charge de la batterie 46 est alors réalisée par l'énergie fournie par le générateur 52, par couplage inductif entre l'antenne d'émission 54 et l'antenne de réception 50. De préférence, le module de gestion d'énergie 48 commande la charge de la batterie 46 pour maintenir l'état de charge de la batterie 46 en permanence à plus de 90 %.

En l'absence de vol, le module de traitement 32 peut commander l'envoi au serveur 44, par exemple de façon périodique, d'un message par le module GSM 40 pour indiquer le bon état de fonctionnement de la montre 10.

Des paramètres de fonctionnement de la montre 10 peuvent être modifiés par un utilisateur par l'intermédiaire du serveur 44. Le serveur 44 peut transmettre à la montre 10 des commandes, notamment pour modifier la fréquence de transmission des coordonnées géographiques en cas d'alarme, pour mettre en veille la localisation GPS et/ou la localisation GSM, pour demander, de façon ponctuelle, des coordonnées géographiques ou pour vérifier l'état de charge de la batterie 46.

A l'étape 66, le module de traitement 32 détermine si un vol a eu lieu. En cas de détection de vol, le procédé se poursuit à l'étape 68. Lorsqu'aucun vol n'est détecté, le procédé se poursuit à l'étape 64. L'étape 66 peut être réalisée simultanément à l'étape 64 décrite précédemment.

Le module de traitement 32 reçoit de l'accéléromètre 24 un signal S₁ représentatif de l'accélération de la montre 10. A titre d'exemple, le signal S₁ est nul lorsque l'accélération de la montre 10 est nulle et est différent de zéro lorsque l'accélération de la montre 10 est différente de zéro. Le module de traitement 32 reçoit, en outre, de l'antenne de réception 50 un signal S₂ représentatif du fait que de l'énergie est reçue par l'antenne 50. A titre d'exemple, lorsque le signal S₂ est différent de zéro, ceci signifie que l'antenne 50 reçoit de l'énergie de l'antenne 54 et lorsque le signal S₂ est nul, ceci signifie que l'antenne 50 ne reçoit pas d'énergie de l'antenne 54.

L'absence de réception d'un signal de téléalimentation par l'antenne 50 peut correspondre à une situation dans laquelle la montre 10, avec le socle 20, a été retirée du présentoir 30. Ainsi, l'alimentation électrique du socle 20 par le présentoir 30 est interrompue, ce qui entraîne l'arrêt du couplage inductif entre le socle 20 et la montre 10.

L'absence de réception d'un signal de téléalimentation par l'antenne 50 peut également correspondre à une situation dans laquelle la montre 10 a été retirée du socle 20, et la distance séparant les antennes de réception 50 et d'émission 54 est trop importante pour permettre un couplage entre celles-ci.

Selon un mode de réalisation, le module de traitement 32 détermine qu'une tentative de vol a lieu lorsque le signal S₂ est nul. Selon un autre mode de réalisation, pour éviter les risques de fausses alarmes, le module de traitement 32 détermine, lorsque l'antenne 50 n'est plus alimentée, si la montre 10 est simultanément en mouvement. Le module de traitement 32 détermine alors qu'une tentative de vol a lieu si les signaux S₁ et S₂ sont simultanément à zéro.

A l'étape 68, le module de traitement 32 se met en mode d'alerte. Il reçoit alors du module GPS 36 les coordonnées géographiques de la montre 10 et commande le module GSM 40 pour transmettre au serveur 44 ces coordonnées, par exemple incorporées à des messages courts qui correspondent à des signaux d'alarme. Le module de télécommunication 60 peut alors correspondre à un serveur SMS.

Le serveur 44 peut proposer un service de suivi en temps réel de la position de la montre 10. En cas d'alerte, le serveur 44 peut transmettre un message d'alerte aux utilisateurs de ce service. Il peut s'agir d'un courriel ou d'un message court. Le message d'alerte peut comprendre un lien de connexion vers un site Internet. La consultation des données récupérées par le serveur 44 peut être réalisée sur ce site Internet. En particulier, une carte avec la position de la montre 10 peut être affichée sur ce site Internet.

Dans certains cas, le module GPS 36 peut ne pas être en mesure de déterminer les coordonnées géographiques de la montre 10, par exemple en l'absence de détection de signaux des satellites du système GPS. La position de la montre 10 peut alors être déterminée en utilisant le réseau de télécommunications de téléphonie mobile par tout procédé de localisation adapté. A titre d'exemple, le procédé de localisation peut mettre en oeuvre un procédé utilisant les identifiants des antennes GSM ou procédé Cell ID, ou un procédé de triangulation à partir des données obtenues par trois antennes relais du réseau de télécommunications de téléphonie mobile.

Les figures 4, 5 et 6 représentent un mode de réalisation du boîtier 12 de la montre 10 et d'éléments contenus dans le boîtier. Le boîtier 12 est réalisé en un matériau sensiblement transparent aux ondes électromagnétiques utilisées par les antennes GPS 38 et GSM 42. Le boîtier 12 comprend des parois latérales 70 qui délimitent, avec le cadran 17, non représenté sur les figures 4 à 6, et un fond 72, un logement inférieur 74 et un logement supérieur 76 séparés par une paroi intermédiaire 78. A titre d'exemple, le logement inférieur 74 a une hauteur d'environ 7 mm, une longueur d'environ 35 mm et une largeur d'environ 25 mm. A titre d'exemple, le logement supérieur 76 a une hauteur d'environ 7 mm, une longueur d'environ 35 mm et une largeur d'environ 35 mm.

La batterie 46 est située dans le logement inférieur 74. De préférence, le fond 72 est amovible pour faciliter l'accès à la batterie 46, par exemple à des fins de maintenance. Un circuit imprimé 80 est prévu dans le logement supérieur 76. Le module de traitement 32, le module GSM 40, le module GPS 36, le module de gestion d'énergie 48, l'accéléromètre 34, l'antenne GSM 42 et l'antenne GPS 38 sont connectés ou formés par des composants connectés au circuit imprimé 80. La paroi intermédiaire 78 comprend une ouverture traversante 82 permettant la connexion électrique de la batterie 46 au circuit imprimé 80.

La figure 7 représente un mode de réalisation de l'antenne 50. Les contours du boîtier 12 et de la partie 16 du bracelet 14 de la montre sont, en outre, représentés de façon schématique. Le bracelet 14 est constitué d'un matériau transparent aux ondes électromagnétiques, par exemple en cuir ou en matière plastique. La partie 16 de bracelet comprend une fente 84 à une extrémité. Le boîtier 12 comprend une fente 86 disposée sensiblement en vis-à-vis de la fente 84. L'antenne 50 est réalisée sur un circuit imprimé flexible 88 dont la majeure partie est disposée dans la partie 16 du bracelet 14 et qui comprend une portion d'extrémité 90 qui pénètre dans les fentes 84, 86 pour déboucher dans le boîtier 12. Le circuit imprimé 88 comprend sur une face 92 une piste conductrice comprenant une première portion d'extrémité 94 se prolongeant par une portion 96, disposée en spirale et formant quatre spires, la portion 94 se prolongeant par une deuxième portion d'extrémité 98. Une portion conductrice 100 supplémentaire est également prévue sur la face 92 et est disposée parallèlement à la portion d'extrémité 94. La portion 94 est connectée à la portion d'extrémité 98 par une piste conductrice disposée sur la face, non visible en figure 7, du circuit imprimé 88 opposée à la face 92 et par des vias traversant le circuit imprimé 88. Les portions d'extrémité 94, 100 sont par exemple connectées au circuit imprimé 80.

A titre d'exemple, les spires de l'antenne 50 ont une forme globale rectangulaire, la spire de plus grande dimensions étant inscrite dans un rectangle ayant une longueur de 40 mm et une largeur de 20 mm.

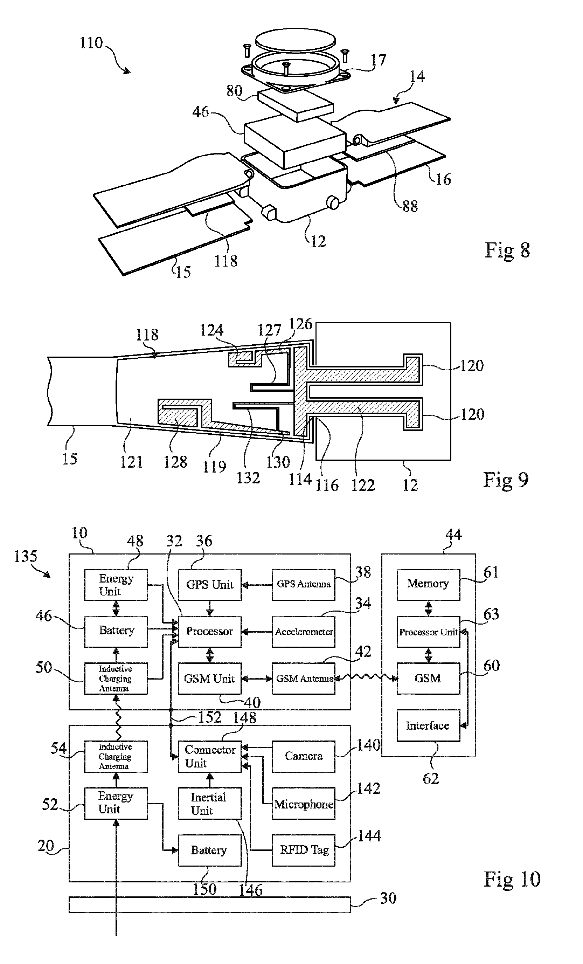

La figure 8 représente une vue schématique, éclatée et en perspective d'un autre mode de réalisation d'une montre 110. La montre 110 comprend l'ensemble des éléments de la montre 10 à la différence que l'antenne GPS 38 et l'antenne GSM 42 ne sont pas contenues dans le boîtier 12 mais sont disposées dans le bracelet 14. Ce mode de réalisation présente l'avantage que les contraintes de dimensionnement pour la réalisation des antennes GPS 38 et GSM 40 sont moins importantes que pour la montre 10.

La figure 9 représente un mode de réalisation de l'antenne GPS 38 et de l'antenne GSM 42 pour la montre 110 de la figure 8. Les contours du boîtier 12 et de la partie 15 du bracelet 14 de la montre sont, en outre, représentés de façon schématique. La partie 15 de bracelet comprend une fente 114 à une extrémité. Le boîtier 12 comprend une fente 116 disposée sensiblement en vis-à-vis de la fente 114. Les antennes 38, 40 sont réalisées sur un circuit imprimé flexible 118 dont la majeure partie 119, de forme trapézoïdale, est disposée dans la partie 15 du bracelet 14 et qui comprend deux pattes 120 pénétrant dans les fentes 114, 116 pour déboucher dans le boîtier 12. Le circuit imprimé 118 comprend sur une face 121 du circuit imprimé 118 une piste conductrice 122 qui s'étend sur chaque patte 120 et sur la base de partie trapézoïdale 119. La piste 122 est connectée à une source d'un potentiel de référence, par exemple la "masse" du circuit imprimé 80. Le circuit imprimé souple 118 comprend, en outre, une piste 124 en spirale dont la base 126 est reliée à la piste 122 par une piste 127 plus étroite. Le circuit imprimé 118 comprend, en outre, une piste 128 en spirale dont la base 130 est reliée à la piste 122 par une piste 132 plus étroite. Un fil conducteur, non représenté, est connecté à la base 126 et un autre fil conducteur est connecté à la base 130, ces fils étant connectés au circuit imprimé.

La figure 10 représente, de façon schématique, les éléments d'un autre mode de réalisation du dispositif de détection de vol 135. Le dispositif 135 comprend l'ensemble des éléments représentés en figure 2 et comprend, en outre, des éléments supplémentaires visant à améliorer la localisation de la montre 10 et du socle 20 en cas de vol.

Le socle 20 comprend, en outre:
une ou plus d'une caméra 140 (Camera) adaptée à faire l'acquisition d'images, par exemple une caméra vidéo et/ou une caméra infrarouge ;
un microphone 142 (Microphone) adapté à faire l'acquisition d'un signal sonore ;
une étiquette radiofréquence 144 (RFID Tag) ;
une centrale inertielle 146 (Inertial Unit) ;
un module de connexion 148 relié à ces composants ; et
un système de stockage d'énergie 150 pour l'alimentation des composants du socle 20.

La connexion électrique entre le socle 20 et la montre 10 est réalisée par une liaison 152 par contact, par exemple une liaison par contacts pressés. Le module de traitement 32 est relié au module de connexion 148 par la liaison 152 lorsque la montre 10 repose sur le socle 20. Le module de gestion d'énergie 52 commande l'état de charge de la batterie 150.

Le module de connexion 148 est adapté à commander l'échange de données entre le module de traitement 32 d'une part et les caméras 140, le microphone 142, la centrale inertielle 146 et éventuellement l'étiquette RFID 144 d'autre part.

A titre d'exemple, en cas de vol, les caméras 140 sont adaptées à faire l'acquisition d'images vidéo des environs du socle 20. Le module de traitement 32 peut commander la transmission au serveur 44 de ces images vidéo par le module GSM 40. De façon analogue, en cas de vol, le microphone 142 est adapté à réaliser un enregistrement sonore des bruits, par exemple des conversations, au voisinage du socle 20. Le module de traitement 32 peut commander la transmission au serveur 44 de cet enregistrement sonore par le module GSM 40.

La centrale inertielle 146 comprend, par exemple, six accéléromètres et un gyromètre, et est adaptée à fournir des signaux représentatifs de coordonnées géographiques du socle 20. En l'absence de vol, le module de traitement 32 peut commander, à intervalles réguliers, la fourniture de coordonnées géographiques par le module GPS 36 et transmettre ces coordonnées à la centrale inertielle 146 pour recaler la centrale inertielle 146. En cas de vol, le module de traitement 32 peut commander la transmission au serveur 44, par le module GSM 40, des coordonnées géographiques fournies par la centrale inertielle 146. La centrale inertielle 146 peut être utilisée lorsque les signaux satellites pour la localisation de la montre 10 par le module GPS 36 ne sont pas disponibles.

Le serveur 44 peut comparer la position fournie par la centrale inertielle 146 avec la position fournie par la localisation GSM. Si l'écart entre les deux positions est supérieur à un seuil, par exemple 50 m, le serveur 44 peut commander la fourniture de nouvelles coordonnées GPS pour recaler la centrale inertielle 46.

L'étiquette radiofréquence 144 peut être utilisée pour une localisation précise du socle 20. La localisation par satellites, la localisation GSM et/ou la localisation par la centrale inertielle peuvent être utilisées pour obtenir des coordonnées géographiques approximatives de la position de la montre 10 et/ou du socle 20. Un utilisateur muni d'un détecteur d'étiquette radiofréquence peut alors se rendre sur les lieux indiqués par les coordonnées géographiques approximatives et rechercher, au moyen du détecteur, la position précise du socle 20. L'étiquette radiofréquence 144 peut être une étiquette active. Dans ce cas, elle est alimentée par la batterie 150. A titre de variante, l'étiquette radiofréquence 144 peut être une étiquette radiofréquence passive. Dans ce cas, elle peut ne pas être connectée à un autre composant électronique du socle 20.

A titre de variante, seul l'un des éléments ou certains des éléments parmi les caméras 140, le microphone 142, la centrale inertielle 144 et l'étiquette radiofréquence 144 peuvent être présents.

Selon une autre variante, le socle 20 peut comprendre un module de télécommunication adapté à échanger des données avec le serveur 44 par l'intermédiaire d'un réseau de télécommunications de téléphonie mobile, par exemple un module GSM ou un module UMTS. Selon cette variante, la liaison 152 et le module de connexion 148 peuvent ne pas être présents. Les données fournies par les caméras 140, le microphone 142 ou la centrale inertielle 146 peuvent être transmises au serveur 44 directement par le socle 20 par l'intermédiaire de ce module de télécommunication.

Des modes de réalisation particuliers ont été décrits. Diverses variantes et modifications apparaîtront à l'homme de l'art. En particulier, bien que, dans les modes de réalisation décrits précédemment, la détection du mouvement de la montre soit réalisée par un accéléromètre, il est clair que la détection du mouvement de la montre peut être réalisée par tout capteur de mouvement, comprenant par exemple un gyromètre, ou un magnétomètre. De plus, bien que, dans les modes de réalisation décrits précédemment, le dispositif de détection de vol soit disposé dans une montre, il est clair que le dispositif de détection de vol peut être disposé dans un autre objet, notamment un article de joaillerie, par exemple un bracelet ou un collier. En outre, on notera que l'homme de l'art pourra combiner divers éléments de ces divers modes de réalisation et variantes sans faire preuve d'activité inventive.

## Revendications

1. Objet (10) comportant un boîtier (12) et des moyens de détection du vol dudit objet (10), dont notamment :
une antenne (50) de réception d'un signal (S₁) de téléalimentation ;
un moyen (32) de détection d'une interruption du signal de téléalimentation ; et
un moyen (40) de fourniture d'un signal d'alarme lorsque l'interruption du signal de téléalimentation est détectée,
dans lequel le boîtier (12), qui contient au moins en partie lesdits moyens de détection du vol, a une apparence extérieure imitant l'apparence d'un article d'horlogerie et/ou de bijouterie.

2. Objet selon la revendication 1, comportant, en outre, un capteur (34) de déplacement dudit objet.

3. Objet selon les revendications 1 et 2, dans lequel le moyen de fourniture du signal d'alarme est adapté à fournir ladite alarme lorsqu'un déplacement de l'objet (10) est détecté.

4. Objet selon l'une quelconque des revendications 1 à 3, comprenant, en outre, un moyen (36) de détermination de la position de l'objet.

5. Objet selon la revendication 1, dans lequel le boîtier (12) a l'apparence d'un boîtier de montre.

6. Objet selon la revendication 5, comprenant, en outre, un bracelet (14) contenant l'antenne (50) de réception du signal de téléalimentation.

7. Dispositif (5, 135) de détection du vol d'un objet (10), comprenant ledit objet (10) selon l'une quelconque des revendications 1 à 6, et un support (20) dudit objet, le support comportant une antenne (54) d'émission du signal de téléalimentation.

## Patentansprüche

1. Ein Objekt (10), wobei das Objekt ein Gehäuse (12) aufweist und ein Mittel (5; 135) zum Detektieren des Diebstahls des Objekts (10), wobei das Objekt Folgendes aufweist:
eine Antenne (50) zum Empfangen eines Fern-Versorgungssignals (S1);
Mittel (32) zum Detektieren einer Unterbrechung des Fern-Versorgungssignals; und
Mittel (40) zum Liefern eines Alarmsignals, wenn die Unterbrechung des Fern-Versorgungssignals detektiert wird,
wobei das Gehäuse, welches wenigstens teilweise die Mittel zum Detektieren des Diebstahls beinhaltet, eine äußere Erscheinung aufweist, die das Aussehen einer Uhr und/oder eines Schmuckstücks imitiert.

2. Das Objekt nach Anspruch 1, wobei das Objekt ferner einen Sensor (34) für den Versatz des Objektes aufweist.

3. Das Objekt nach Anspruch 1 und 2, wobei die Alarmsignal Lieferungsmittel geeignet sind den Alarm zu liefern, wenn ein Versatz des Objektes (10) detektiert wird.

4. Das Objekt nach einem der Ansprüche 1 bis 3, wobei das Objekt ferner Mittel (36) zum Bestimmen der Position des Objekts aufweist.

5. Das Objekt nach Anspruch 1, wobei das Gehäuse (12) das Aussehen eines Uhrengehäuses aufweist.

6. Das Objekt nach Anspruch 5, wobei das Objekt ferner einen Riemen (14) aufweist, der die Empfangsantenne (50) für das Fern-Versorgungssignal beinhaltet.

7. Eine Vorrichtung (5, 135) zum Detektieren des Diebstahls eines Objekts (10), das das Objekt (10) nach einem der Ansprüche 1 bis 6 aufweist und eine Auflage (20) des Objekts, wobei die Auflage eine Antenne (54) aufweist, zum Senden des Fern-Versorgungssignals.

## Claims

1. An object (10) comprising a case (12) and a means (5; 135) for detecting the theft of said object (10), including:
an antenna (50) for receiving a remote-supply signal (S₁);
means (32) for detecting an interruption of the remote-supply signal; and
means (40) for delivering an alarm signal when the interruption of the remote-supply signal is detected,
wherein the case, which at least partly contains the means for detecting the theft, has an external aspect imitating the aspect of a timepiece and/or jewelry item.

2. The object of claim 1 further comprising a sensor (34) of the displacement of said object.

3. The object of claims 1 and 2, wherein the alarm signal delivery means are capable of delivering said alarm when a displacement of the object (10) is detected.

4. The object of any of claims 1 to 3 further comprising means (36) for determining the position of the object.

5. The object of claim 1, wherein the case (12) has the aspect of a watch case.

6. The object of claim 5, further comprising a strap (14) containing the remote-supply signal reception antenna (50).

7. A device (5, 135) for detecting the theft of an object (10) comprising said object (10) of any of claims 1 to 6 and a support (20) of said object, the support comprising an antenna (54) for transmitting the remote-supply signal.
